# EUROPÄISCHE PATENTSCHRIFT

(11) **EP 0 952 280 B1**
(45) Veröffentlichungstag und Bekanntmachung des Hinweises auf die Patenterteilung: **16.03.2005**
(21) Anmeldenummer: 99107519.3
(22) Anmeldetag: 15.04.1999
(51) Int. Cl.: E04H 6/22, B65G 1/04

(54) **Regallager, insbesondere für Personenkraftwagen**
Shelf storage, especially for passenger cars
Magasin à rayonnage, en particulier pour des voitures particulières

(30) Priorität: 23.04.1998 DE 19818162
(43) Veröffentlichungstag der Anmeldung: 27.10.1999
(73) Patentinhaber: Stolzer, Paul, 77855 Achern (DE)
(72) Erfinder: Stolzer, Paul, 77855 Achern (DE)
(74) Vertreter: Lasch, Hartmut Dipl.-Ing.

(56) Entgegenhaltungen:
- EP-A- 0 432 129
- WO-A-89/01557
- CH-A- 446 687

## Beschreibung

Die Erfindung betrifft ein Regallager insbesondere für Personenkraftwagen, gemäß dem Oberbegriff des Anspruchs 1.

Derartige automatisierte Regallager und insbesondere Hochregallager dienen einer möglichst vollständigen Ausnutzung eines vorhandenen Lagerraums, wobei die Größe der einzelnen Regalfächer an die jeweils einzulagernden Gegenstände angepaßt ist. Im folgenden soll beispielhaft von einem Regallager für Personenkraftwagen ausgegangen werden, wie es in der DE 94 09 910 U1 beschrieben ist. Bei einem derartigen Regallager weist jedes Regalfach sowie eine Hubbühne des in einem Regalgang verfahrbaren Regalbediengerätes zwei übereinander angeordnete Aufnahmen für jeweils eine Palette auf. Eine der Aufnahmen jedes Regalfachs sowie der Hubbühne des Bediengerätes ist immer mit einer Palette belegt, während die andere Aufnahme frei ist. Beim Einlagern bzw. Auslagern einer den PKW tragenden Palette findet somit zwischen der Hubbühne und dem jeweiligen Regalfach ein Palettenaustausch statt. Um die horizontale Einschub- bzw. Auszugsbewegung der Palette zu erzielen, ist an der Hubbühne an beiden entgegengesetzten Seiten der Aufnahme jeweils ein Reibrad mit einem Antriebsmotor angeordnet, das um eine vertikale Achse drehbar ist und mit einer Außenseitenfläche der Palette in Anlage gebracht werden kann. Bei Drehung der Reibräder wird auf die Palette eine horizontal gerichtete Schubkraft ausgeübt. Die seitliche Anordnung der Reibräder bringt jedoch den Nachteil mit sich, daß zwischen benachbarten Regalplätzen ein ausreichender Zwischenraum vorhanden sein muß, damit das Reibrad zur seitlichen Anlage an einer eingelagerten Palette in diesen Zwischenraum einfahren kann. Da die Zwischenräume für die eigentliche Lagerung nicht zur Verfügung stehen, ist diese Lagerkonstruktion relativ platzaufwendig.

Bei der Übergabe einer Palette zwischen dem Regalfach und der Hubbühne sollte eine schnelle, möglichst kontinuierliche Bewegung ablaufen. Allein eine horizontale Verschiebung der Palette erfüllt diese Anforderung jedoch nicht, da die Hubbühne nicht oder nur mit sehr großem konstruktiven Aufwand mit hoher Genauigkeit relativ zu dem Regalfach ausrichtbar ist, so daß die Einschub- bzw. Auszugsbewegung der Palette durch Vorsprünge oder Abstufungen häufig behindert ist. Es ist deshalb bekannt, die Palette in angehobenem Zustand zu verschieben und anschließend wieder abzusenken. Aufgrund dieser nacheinander ablaufenden, unterschiedlichen Bewegungen der Palette ist deren Übergabe relativ zeitaufwendig, wodurch die Umschlagleistung des Regallagers vermindert ist. Darüber hinaus ist auch hier eine sehr hohe Maßgenauigkeit erforderlich, was herstellungstechnisch aufwendig und kostenintensiv ist.

In der WO 89/01557 A, von der im Oberbegriff des Anspruchs 1 ausgegangen wird, ist ein automatisches Parkhaus beschrieben, bei dem bei der Übergabe eines auf einer Palette stehenden Fahrzeugs an oder aus einem Lagerplatz jeweils parallel dazu auch eine Leerpalette in entgegengesetzte Richtung umgelagert wird. Zu diesem Zweck sind sowohl in den Regalfächern als auch in dem Bediengerät Aufnahmemöglichkeiten für übereinanderliegende Paletten vorgesehen. Für die Verschiebung der oberen Palette sind mehrere in Abstand zueinander angeordnete Rollen vorgesehen, wobei ein angetriebenes Laufrad derart verschwenkt werden kann, daß es an einem mit einer Rolle verbundenen Antriebsrad in Anlage kommt. Dadurch wird auch diese Rolle drehangetrieben, wobei die weiteren Rollen über Ketten ebenfalls eine Antriebsdrehung erfahren.

Um die in einem Regalfach liegende untere Palette aus diesem herauszuziehen, ist ein schwenkbares, drehangetriebenes Tragrad vorgesehen, das von unten mit der Platte in Anlage gebracht werden kann, so daß die untere Palette von ihrem Auflager abgehoben wird und aus dem Regalfach herausgezogen werden kann. Das Tragrad ist am freien Ende eines schwenkbaren Hebels angebracht, der pneumatisch oder hydraulisch verstellt werden kann. Da die aus der Palette resultierende Last am freien Ende des Hebels einwirkt, ergeben sich relativ große Momentenbelastungen, die von der pneumatischen oder hydraulischen Verstellvorrichtung des Hebels überwunden werden müssen. Auf diese Weise ist das Anheben der Palette konstruktiv aufwendig und fehleranfällig.

Der Erfindung liegt die Aufgabe zugrunde, ein Regallager der genannten Art zu schaffen, bei dem in einfacher Weise eine schnelle, präzise Palettenübergabe gewährleistet ist.

Diese Aufgabe wird bei einem Regallager der eingangs genannten Art mit den kennzeichnenden Merkmalen des Anspruchs 1 gelöst. Dabei ist vorgesehen, daß jede Trageinheit ein vorderes höhenverstellbares, angetriebenes, um eine horizontale Achse drehbares Tragrad aufweist, das eine Lauffläche der Palette derart untergreift, daß die Palette relativ zu der Aufnahme des Regalfachs anhebbar ist. Zusätzlich weist jede Trageinheit ein weiteres, in Palettenschubrichtung hinter dem vorderen Tragrad liegendes hinteres Tragrad auf, das ebenfalls die Lauffläche der Palette untergreift. Somit ist vorgesehen, daß jede Trageinheit zwei in Palettenschubrichtung hintereinander liegende Tragräder aufweist, die an einem gemeinsamen, um eine horizontale Achse schwenkbaren Hebel gelagert sind. Der schwenkbare Hebel ermöglicht es, daß bei der Andockbewegung zuerst das dem Regalfach zugewandte vordere Tragrad unter die Palette taucht. Wenn dann das dahinterliegende hintere Tragrad mit der Lauffläche in Anlage kommt, erfolgt eine horizontale Ausrichtung des Hebels und somit der Tragräder, durch die die Palette angehoben wird.

Erfindungsgemäß ist die Funktion des Antriebs sowie des Anhebens der Palette in den Tragrädern vereinigt. Die Tragräder greifen dabei nicht auf der Außenseite der Palette an, sondern untergreifen die Palette an einer Lauffläche, wobei durch die Höhenverstellbarkeit der Tragräder erreicht werden kann, daß gleichzeitig auch ein Anheben der Palette erfolgt. Wenn die vertikal ausgerichteten, d.h. um eine horizontale Achse drehbaren Tragräder von unten mit der sich in Längsrichtung der Palette erstreckenden Lauffläche in Anlage gebracht und angetrieben werden, kann auf die Palette eine horizontale Schubkraft aufgebracht werden, gleichzeitig wird die Palette durch Verstellen des Tragrads angehoben, so daß das Ein- bzw. Auslagern der Palette in einer kontinuierlichen Bewegung erfolgen kann.

Da die Tragräder von der Unterseite an der Lauffläche der Palette anliegen, muß zwischen einzelnen Regalfächern kein oder ein nur sehr geringer Zwischenraum freigehalten werden, so daß die Platzausnutzung im Regallager wesentlich verbessert ist.

Auch bei dem erfindungsgemäßen Regallager werden die Paletten an ihren entgegengesetzten Längsseiten mittels jeweils einer Trageinheit abgestützt und angetrieben, so daß eine gleichmäßige Translationsbewegung der Palette zu erzielen ist.

Um eine vorbestimmte Anlage des vorderen Tragrades an der Palette zu gewährleisten, kann der Hebel in bevorzugter Ausgestaltung mittels einer Feder in eine schräge, auf der dem Regalfach zugewandten Seite angehobene Lage mit geringer Kraft vorgespannt sein.

Eine kontinuierliche, glatte Bewegung des Tragrades und der Palette beim Untergreifen der Lauffläche kann erreicht werden, wenn am Ende der Lauffläche der Palette eine Anlaufschräge ausgebildet ist, an die sich das Tragrad anlegt und entlang dieser zur unteren Lauffläche geführt wird.

Wie bereits erwähnt, sind die Laufflächen auf der Unterseite der Palette ausgebildet. Eine besonders einfache Konstruktion ergibt sich, wenn die Laufflächen der Paletten auf der Unterseite von seitlich vorstehenden, vorzugsweise horizontalen Längsflanschen gebildet sind.

Es ist bekannt, die Paletten zur Erzielung einer leichtgängigen Einschub- bzw. Auszugsbewegung auf Rollen zu lagern. Um ein ungewolltes Herausrollen der Paletten aus dem Regalfach zu verhindern, sollten in dem Regalfach bremsklotzartige Sperrelemente angeordnet sein, die die Rollen formschlüssig festlegen, wobei die Paletten beim Einlagern mit ihren Rollen zwischen die Sperrelemente abgesenkt bzw. beim Auslagern aus diesen herausgehoben werden.

Wenn das Regallager in oben genannter Weise so aufgebaut ist, daß jedes Regalfach sowie das Regalbediengerät zwei übereinander angeordnete Aufnahmen für jeweils eine Palette aufweist, von denen immer eine der Aufnahmen mit einer Palette belegt ist, so daß beim Ein- oder Auslagern der die Last tragenden Palette ein Palettenaustausch zwischen dem Bediengerät und dem Regalfach stattfindet, besitzt die Andockvorrichtung zwei übereinander angeordnete Übergabeeinrichtungen genannten Aufbaus, die jeweils einer der Aufnahmen zugeordnet sind.

Weitere Einzelheiten und Mermkale der Erfindung sind aus der folgenden Beschreibung eines Ausführungsbeispiels unter Bezugnahme auf die Zeichnung näher erläutert. Es zeigen
- Fig. 1: eine ausschnittsweise Ansicht eines Regallagers und
- Fig. 2 bis 10: die einzelnen Phasen einer Paletteneinlagerung bzw. eines Palettenaustauschs.

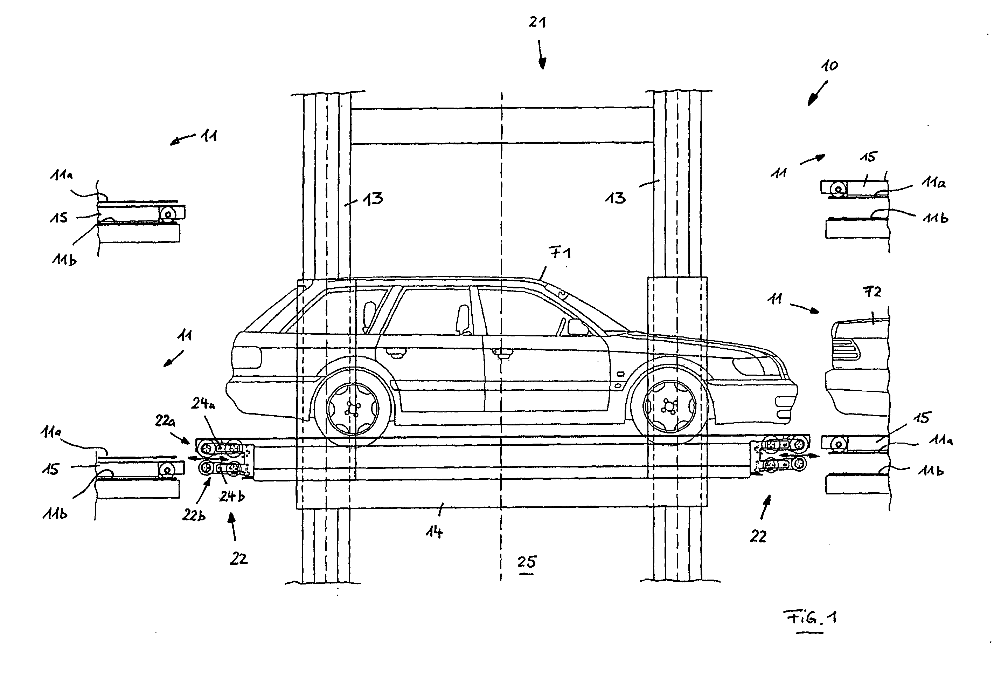

Fig. 1 zeigt ein Regallager 10 mit einem entlang einem Regalgang 25 verfahrbaren Regalbediengerät 21, das vertikale Stützen 13 und eine entlang den Stützen 13 vertikal verfahrbare Hubbühne 14 aufweist.

Seitlich des Regalgangs 25 sind auf beiden Seiten übereinander angeordnete Regalfächer 11 vorgesehen, die jeweils eine untere Aufnahme 11b für eine leere Palette 15 sowie eine darüber angeordnete Aufnahme 11a aufweisen, auf der eine mit einem Kraftfahrzeug F1 bzw. F2 beladene Palette 15 aufgenommen werden kann.

Der Hubtisch 14 weist auf seinen den Regalfächern 11 zugewandten Seiten jeweils eine Andockvorrichtung 22 auf, die horizontal gegen das jeweilige Regalfach 11 ausfahrbar ist, wie durch die Doppelpfeile angedeutet ist. Jede Andockvorrichtung 22 umfaßt dabei zwei übereinander angeordnete Übergabeeinrichtungen 22a und 22b, von denen die obere Übergabeeinrichtung 22a der oberen Aufnahme 11a des Regalfachs 11 und die untere Übergabeeinrichtung 22b der unteren Aufnahme 11b des Regalfachs 11 zugeordnet ist.

Jede Übergabeeinrichtung 22a bzw. 22b umfaßt zwei in Palettenquerrichtung, d.h. senkrecht zur Zeichenebene der Fig. 1 beabstandete Trageinheiten 24a bzw. 24b, die eine Palette 15 unterhalb ihrer Längsränder aufnehmen können und auf diese eine Antriebsbewegung aufbringen.

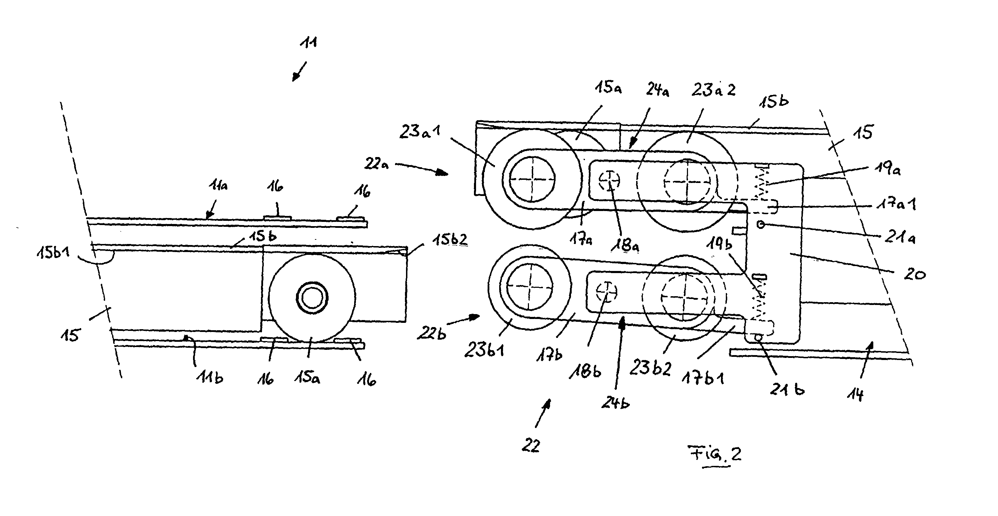

Der konstruktive Aufbau der Andockvorrichtungen 22 bzw. der Trageinheiten 24a und 24b ist in Fig. 2 näher dargestellt. Wie dort ersichtlich ist, umfaßt die obere Trageinheit 24a zwei Tragräder 23a1 und 23a2, die vertikal ausgerichtet, d.h. jeweils um eine horizontale Achse drehbar sind. Die beiden Tragräder 23a1 und 23a2 sind in Paletteneinschubrichtung hintereinander liegend angeordnet und an einem Hebel 17a drehbar gelagert, der in einem zwischen den Tragrädern 23a1 und 23a2 liegenden Lagerpunkt 18a schwenkbar an einem Träger 20 des Hubtisches 14 gelagert ist. Durch Schwenkung des Hebels 17a um den Lagerpunkt 18a können die Tragräder 23a1 und 23a2 eine wippenartige vertikale Auf- und Abbewegung ausführen.

Auf einen Vorsprung 17a1 des Hebels 17a wirkt eine Feder 19a ein, die mit ihrem anderen Ende am Träger 20 abgestützt ist und den Hebel 17a im unbelasteten, d.h. keine Palette tragenden Zustand in eine leicht schräge, auf der dem Regalfach 11 zugewandten Seite angehobene Lage vorspannt, in der der Vorsprung 17a1 an einem Anschlag 21a des Trägers 20 anliegt (s. Fig. 10).

Unterhalb der oberen Trageinheit 24a ist eine gleichartig aufgebaute untere Trageinheit 24b vorgesehen, die ebenfalls zwei vertikal ausgerichtete, um eine horizontale Achse drehbar an einem Hebel 17b gelagerte Tragräder 23b1 und 23b2 aufweist, die in Paletteneinschubrichtung hintereinander liegend angeordnet sind. Der Hebel 17b ist über einen zwischen den Tragrädern 23b1 und 23b2 liegenden Lagerpunkt 18b ebenfalls schwenkbar an dem Träger 20 des Hubtisches 14 gelagert, so daß die Tragräder 23b1 und 23b2 eine wippenartige vertikale Auf- und Abbewegung ausführen können. Auch der Hebel 17b besitzt einen Vorsprung 17b1, der mittels einer Feder 19b in unbelastetem Zustand gegen einen Anschlag 21b gedrückt ist, so daß der Hebel 17b eine leicht schräge, auf seiner dem Regalfach 11 zugewandten Seite angehobene Stellung einnimmt, wie in Fig. 2 ersichtlich ist.

Die übereinander liegenden Aufnahmen 11a und 11b des Regalfachs 11 weisen auf ihrer Oberseite jeweils zwei in Abstand angeordnete bremsklotzartige Sperrelemente 16 auf. Die die Last aufnehmende Palette 15 besitzt mehrere Rollen 15a, von denen nur eine dargestellt ist. Wenn sich die Palette 15 in der Aufnahme 11a oder 11b eines Regalfachs befindet, sind die Rollen 15a zwischen zwei Sperrelementen 16 aufgenommen, so daß die Palette 15 an einer ungewollten Verlagerung gehindert ist.

In ihrem oberen Bereich besitzt die Palette 15 seitlich vorstehende, im wesentlichen horizontale Flansche 15b, die auf ihrer Unterseite eine Lauffläche 15b1 für die Tragräder bilden. Am Ende der Lauffläche 15b1 besitzt jede Palette eine Anlaufschräge 15b2, gegen die die Tragräder beim Andockvorgang auflaufen.

Die Tragräder 23a1, 23a2, 23b1 und 23b2 sind in nicht dargestellter Weise drehangetrieben, was beispielsweise durch geeignete Übertragungsmittel, insbesondere Ketten, erfolgen kann.

In Fig. 2 ist die Situation dargestellt, daß in der unteren Aufnahme 11b des Regalfachs 11 eine leere Palette 15 angeordnet ist, während auf den Trageinheiten 24a der oberen Übergabeeinrichtung 22a eine Palette 15 mit einer einzulagernden, nicht dargestellten Last aufgenommen ist. Im folgenden soll nun der Ablauf der Einlagerung der auf der Übergabeeinrichtung 22a befindlichen Palette 15 in die obere Aufnahme 11a des Regalfachs erläutert werden.

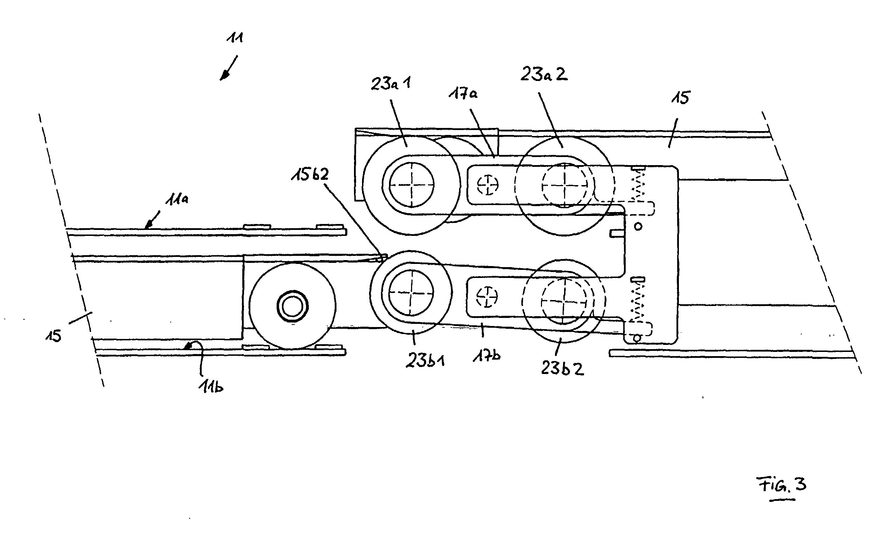

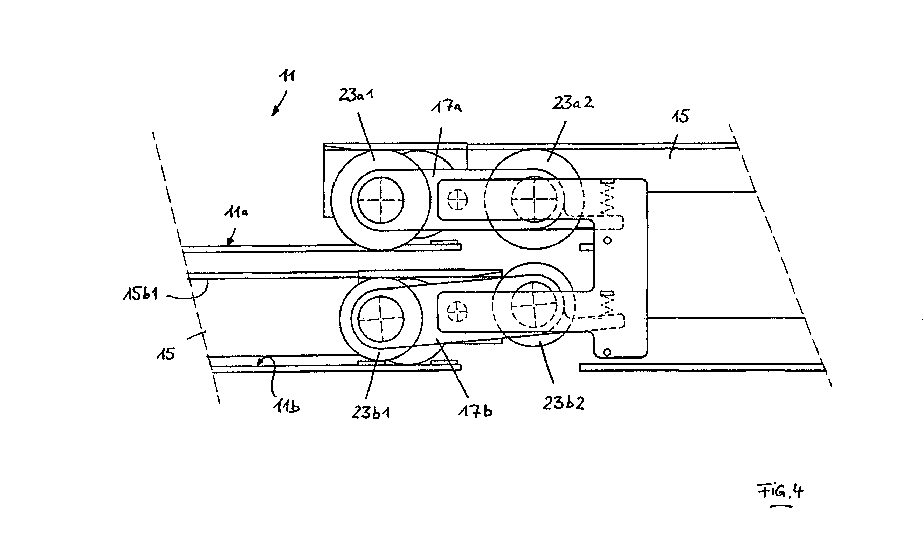

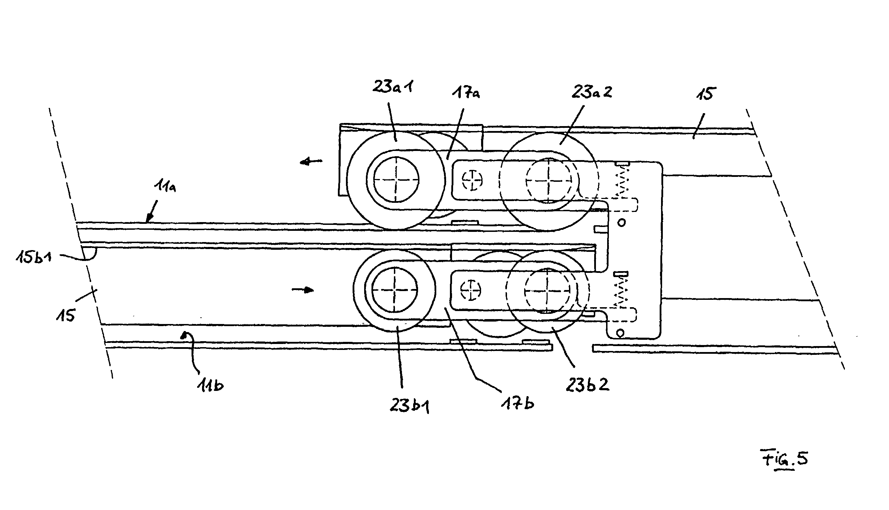

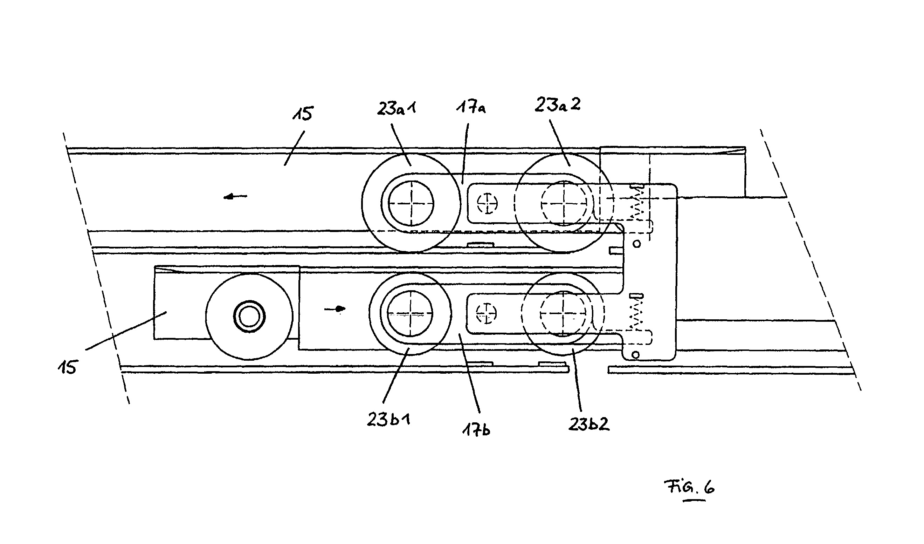

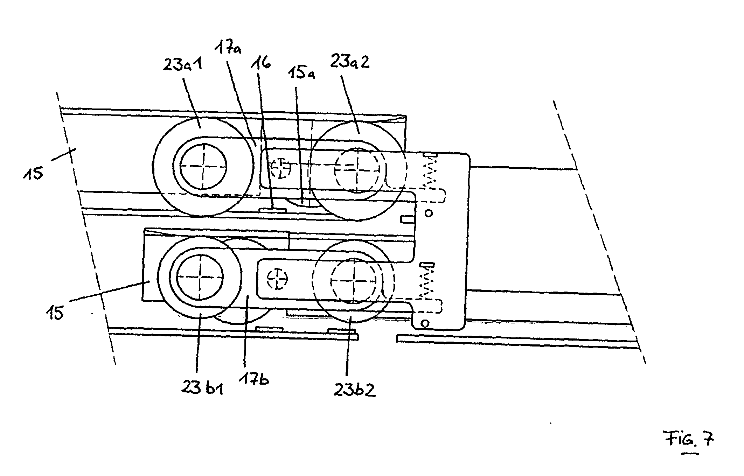

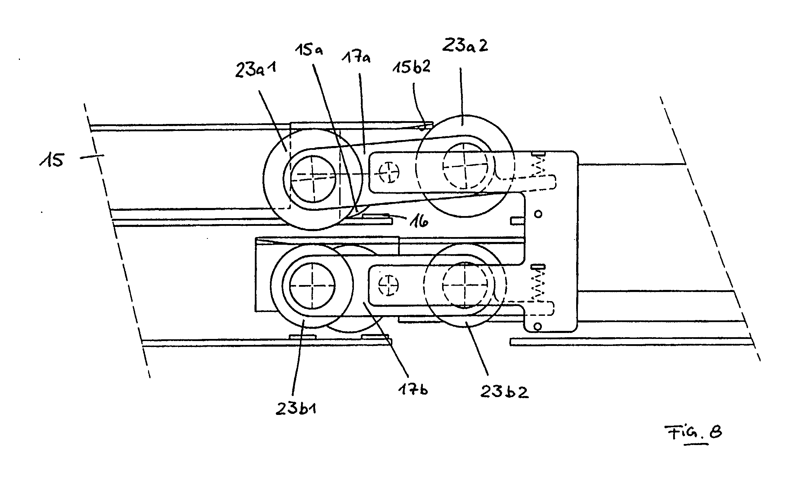

Ausgehend von Fig. 2 wird die Andockvorrichtung mit beiden Übergabeeinrichtungen 22a und 22b horizontal in Richtung des Regalfachs 11 ausgefahren, wobei zunächst das vordere, dem Regalfach 11 zugewandte Tragrad 23b1 der unteren Trageinheit 24b mit der Anlaufschräge 15b2 der in der unteren Aufnahme 11b befindlichen Palette 15 in Anlage kommt. Dabei ist das Tragrad 23b1 entsprechend der Ausfahrbewegung drehangetrieben. Dieser Zustand ist in Fig. 3 dargestellt.

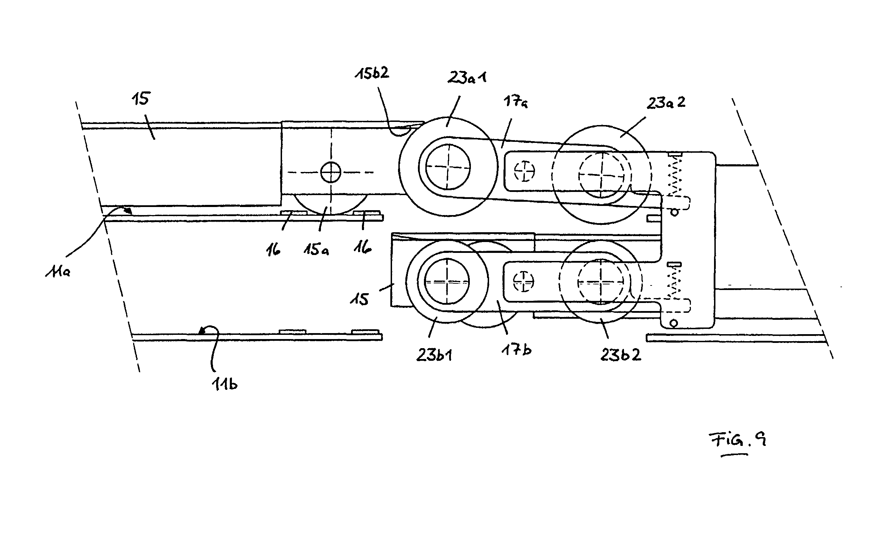

Durch die Anlaufschräge 15b2 wird das äußere Tragrad 23b1 nach unten abgelenkt, so daß der Hebel 17b entgegen der Kraft der Feder 19b in eine nach unten sowie nach außen geneigte Position verschwenkt und das äußere Tragrad 23b1 den Flansch 15b untergreift und mit dessen Lauffläche 15b1 in Anlage kommt und aufgrund seiner Drehung an dieser entlangläuft. Dieser Zustand ist in Fig. 4 gezeigt.

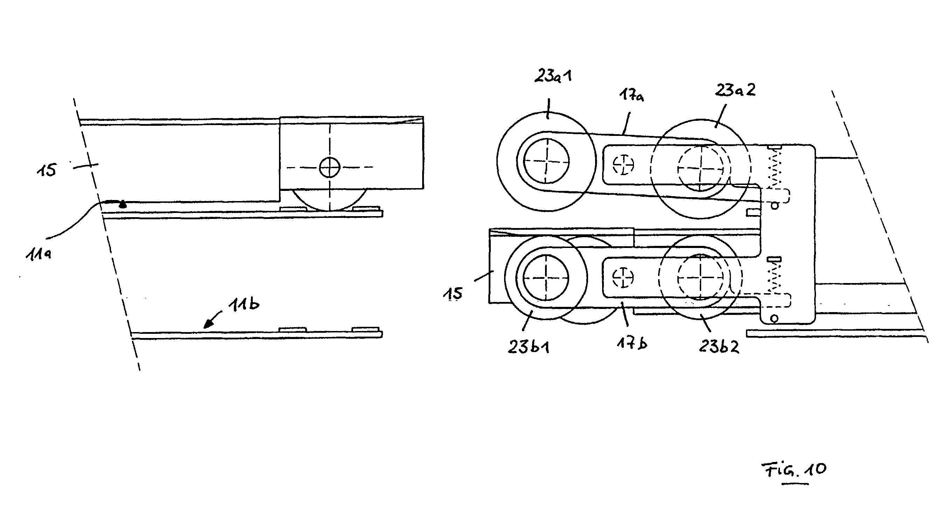

Die weitere Ausfahrbewegung der Andockvorrichtung 22 führt dazu, daß auch das hintere, ebenfalls drehangetriebene Tragrad 23b2 gegen die Anlaufschräge 15b der Palette 15 anläuft und von dieser nach unten abgelenkt wird. Da die freie Schwenkung des Hebels 17b durch das bereits an der Lauffläche 15b1 anliegende vordere Tragrad 23b1 behindert ist, führt das Erreichen der Lauffläche 15b1 durch das innere Tragrad 23b2 zu einem Anheben der Palette 15, da die von den Oberseiten der Tragräder 23b1 und 23b2 aufgespannte Ebene höher als die Lauffläche 15b1 liegt. Auf diese Weise wird die Rolle 15a der Palette 15 aus den Sperrelementen 16 herausgehoben wird. Dieser angehobene Zustand ist in Fig. 5 gezeigt.

Nunmehr wird die Ausschubbewegung gestoppt, wobei jedoch die Tragräder weiterhin angetrieben werden, so daß die untere, leere Palette 15 aus der unteren Aufnahme 11b des Regalfachs 11 in die Hubbühne 14 übernommen und die obere, die Last tragende Palette 15 in die obere Aufnahme 11a des Regalfachs 11 eingeschoben wird. Dieser Palettenaustausch ist in Fig. 6 dargestellt. Wenn die obere, einzulagernde Palette 15 ihre vorbestimmte Sollposition erreicht hat (Fig. 7), wird die Andockvorrichtung 22 zurückgezogen, wobei zunächst das hintere Tragrad 23a2 aus der die Lauffläche 15b1 untergreifenden Anlage freikommt, wodurch der Hebel 17a eine Schwenkung ausführt und die Palette 15 mit ihrer Rolle 15a zwischen die Sperrelemente 16 der oberen Aufnahme 11a abgesenkt wird (Fig. 8). Ein weiteres Zurückziehen der Andockvorrichtung 22 führt dazu, daß auch das äußere Tragrad 23a1 von der Palette freikommt, wodurch der Hebel 17a infolge der Kraft der Feder 19a in seine leicht schräg nach oben und außen geneigte Stellung verschwenkt (Fig. 9). Nach weiterem Rückziehen der Andockvorrichtung 22 ist wieder der Ausgangszustand erreicht (Fig. 10), wobei nunmehr jedoch ein Palettenwechsel stattgefunden hat.

## Patentansprüche

1. Regallager insbesondere für Personenkraftwagen (F1), mit einer Vielzahl von übereinander und/oder nebeneinander angeordneten Regalfächern (11) und einem Bediengerät (21) mit zumindest einer Andockvorrichtung (22), mittels der eine eine Last tragende Palette (15) in eine Aufnahme (11a, 11b) eines Regalfachs (11) einlagerbar bzw. aus diesem auslagerbar ist, wobei die Andockvorrichtung (22) eine Übergabeeinrichtung (22a, 22b) aufweist, die zwei in Querrichtung der Palette (15) beabstandete Trageinheiten (24a, 24b) umfaßt, wobei jede Trageinheit (24a, 24b) ein vorderes höhenverstellbares, angetriebenes, um eine horizontale Achse drehbares Tragrad (23a1, 23b1) aufweist, das eine Lauffläche 15b1) der Palette (15) derart untergreift, daß die Palette (15) relativ zu der Aufnahme (11a, 11b) des Regalfaches (11) anhebbar ist, **dadurch gekennzeichnet, daß** jede Trageinheit (24a, 24b) ein weiteres in Palettenschubrichtung hinter dem vorderen Tragrad (23a1,23b1) liegendes hinteres Tragrad (23a2, 23b2) aufweist, das ebenfalls die Lauffläche (15b1) der Palette (15) untergreift, wobei die Tragräder (23a1, 23a2, 23bl, 23b2) an einem gemeinsamen, um eine zwischen den Tragrädern verlaufende horizontale Achse schwenkbaren Hebel (17a, 17b) gelagert sind.

2. Regallager nach Anspruch 1, **dadurch gekennzeichnet, daß** der Hebel (17a, 17b) mittels einer Feder (19a, 19b) in eine schräge, auf der dem Regalfach (11) zugewandten Seite angehobene Lage vorgespannt ist.

3. Regallager nach Anspruch 1 oder 2, **dadurch gekennzeichnet, daß** am Ende der Lauffläche (15b1) der Palette (15) eine Anlaufschräge (15b3) ausgebildet ist.

4. Regallager nach einem der Ansprüche 1 bis 3, **dadurch gekennzeichnet, daß** die Laufflächen (15b1) der Paletten auf der Unterseite von seitlich vorstehenden Längsflanschen (15b) ausgebildet sind.

5. Regallager nach einem der Ansprüche 1 bis 4, **dadurch gekennzeichnet, daß** die Palette (15) auf Rollen (15a) gelagert ist und daß die Rollen (15a) in dem Regalfach (11) mittels Sperrelementen (16) formschlüssig festlegbar sind.

6. Regallager nach einem der Ansprüche 1 bis 5, **dadurch gekennzeichnet, daß** jedes Regalfach (11) sowie das Bediengerät (21) zwei übereinander angeordnete Aufnahmen (11a, 11b; 22a, 22b) für jeweils eine Palette (15) aufweist, von denen immer eine der Aufnahmen mit einer Palette (15) belegt ist, so daß beim Ein- oder Auslagern der die Last tragenden Palette ein Palettenaustausch zwischen dem Bediengerät (21) und dem Regalfach (11) stattfindet, wobei die Andockvorrichtung (22) zwei übereinander angeordnete Übergabeeinrichtungen (22a, 22b) besitzt, die jeweils einer der Aufnahmen (11a, 11b) zugeordnet sind.

## Claims

1. Multistorey garage, particularly for cars (F1), with a plurality of superimposed and/or juxtaposed compartments (11) and a stacker crane (21) with at least one docking device (22), by means of which a load-carrying pallet (15) can be stored or destored with respect to a receptacle (11a, 11b) of a compartment (11), the docking device (22) having a transfer device (22a, 22b) comprising two support units (24a, 24b) spaced in the transverse direction of the pallet, each support unit (24a, 24b) having a front, vertically adjustable, driven support wheel (23a1, 23b1) rotatable about a horizontal axis and which engages under a bearing surface (15b1) of the pallet (15) in such a way that said pallet (15) can be raised relative to the receptacle (11a, 11b) of the compartment (11), **characterized in that** each support unit (24a, 24b) has a further, rear support wheel (23a2, 23b2) located behind the front support wheel (23a1, 23b1) in the pallet pushing direction and which also engages below the bearing surface (15b1) of the pallet (15), the support wheels (23a1, 23a2, 23b1, 23b2) being mounted on a common lever (17a, 17b) pivotable about a horizontal axis running between the support wheels.

2. Multistorey garage according to claim 1, **characterized in that** the lever (17a, 17b) is biased by means of a spring (19a, 19b) in a sloping position raised on the side facing the compartment (11).

3. Multistorey garage according to claim 1 or 2, **characterized in that** a starting slope (15b3) is formed at the end of the bearing surface (15b1) of the pallet (15).

4. Multistorey garage according to one of the claims 1 to 3, **characterized in that** the bearing surfaces (15b1) of the pallets are formed on the underside of laterally projecting longitudinal flanges (15b).

5. Multistorey garage according to one of the claims 1 to 4, **characterized in that** the pallet (15) is mounted on rolls (15a) and that the rolls (15a) are positively fixable in the compartment (11) by means of locking elements (16).

6. Multistorey garage according to one of the claims 1 to 5, **characterized in that** each compartment (11) and the stacker crane (21) has two superimposed receptacles (11a, 11b; 22a, 22b) for in each case one pallet (15), whereof one of the receptacles is always occupied by a pallet (15), so that on storing or destoring the load-carrying pallet, a pallet exchange takes place between the stacker crane (21) and the compartment (11), the docking device (22) having two superimposed transfer devices (22a, 22b) in each case associated with one of the receptacles (11a, 11b).

## Revendications

1. Garage à rayonnages, en particulier pour des voitures (F1), comprenant une pluralité de compartiments (11) disposés les uns au-dessus ou à côté des autres, et un élément de manoeuvre (21) présentant au moins un dispositif d'accouplement (22) au moyen duquel une palette (15) portant une charge peut être stockée dans un logement (11a, 11b) d'un compartiment (11) ou destockée, le dispositif d'accouplement. (22) présentant un dispositif de transfert (22a, 22b) comprenant deux unités porteuses (24a, 24b) à distance l'une de l'autre dans le sens transversal de la palette (15), chaque unité porteuse (24a, 24b) présentant une roue porteuse avant (23a1, 23b1) réglable en hauteur, commandée et pivotant autour d'un axe horizontal, qui passe sous une surface de roulement (15b1) de la palette (15) de telle façon que la palette (15) peut être soulevée par rapport au logement (11a, 11b) du compartiment de rayonnage (11), **caractérisé en ce que** chaque unité porteuse (24a, 24b) présente une autre roue porteuse arrière (23a2, 23b2) située derrière la roue porteuse avant (23a1, 23b1) dans le sens de poussée de la palette, qui passe également sous la surface de roulement (15b1) de la palette (15), les roues porteuses (23a1, 23a2, 23bl, 23b2) étant montées sur un levier commun (17a, 17b) pivotant autour d'un axe horizontal s'étendant entre les roues porteuses.

2. Garage à rayonnages selon la revendication 1, **caractérisé en ce que** le levier (17a, 17b) est précontraint au moyen d'un ressort (19a, 19b) dans une position inclinée vers le haut du côté dirigé vers le compartiment de rayonnage (11).

3. Garage à rayonnages selon la revendication 1 ou 2, **caractérisé en ce qu'**une inclinaison d'élan (15b2) est conformée à l'extrémité de là surface de roulement (15b1) de la palette (15).

4. Garage à rayonnages selon l'une quelconque des revendications 1 à 3, **caractérisé en ce que** les surfaces de roulement (15b1) des palettes sont constituées sur la face inférieure de flasques longitudinaux (15b) en saillie latérale.

5. Garage à rayonnages selon l'une quelconque des revendications 1 à 4, **caractérisé en ce que** la palette (15) repose sur des galets (15a) et **en ce que** les galets (15a) peuvent être fixés à ajustement de forme dans le compartiment de rayonnage (11) au moyen d'éléments de blocage (16).

6. Garage à rayonnages selon l'une quelconque des revendications 1 à 5, **caractérisé en ce que** chaque compartiment de rayonnage (11) ainsi que l'élément de manoeuvre (21) présentent deux logements (11a, 11b ; 22a, 22b) disposés l'un sur l'autre chacun pour une palette (15), dont l'un des logements est toujours occupé par une palette (15) de sorte que lors du stockage ou du déstockage de la palette portant la charge, il se produit un échange de palettes entre l'élément de manoeuvre (21) et le compartiment de rayonnage (11), le dispositif d'accouplement (22) comportant deux dispositifs de transfert (22a, 22b) disposés l'un au-dessus de l'autre, associés chacun à l'un des logements (11a, 11b).
